# DEMANDE DE BREVET EUROPEEN

(11) **EP 1 455 029 A1**
(43) Date de publication de la demande: **08.09.2004**
(21) Numéro de dépôt: 04447022.7
(22) Date de dépôt: 30.01.2004
(51) Int. Cl.: E04C 2/52, F24D 3/16

(54) **Elément de construction diffuseur de chaleur**

(30) Priorité: 04.03.2003 BE 200300136
(71) Demandeur: Marchal, Olivier, 4670 Blegny (BE); Marchal, Emeric, 4590 Ouffet (BE)
(72) Inventeur: Marchal, Olivier, 4670 Blegny (BE); Marchal, Emeric, 4590 Ouffet (BE)
(74) Mandataire: Van Malderen, Joelle

(57) **Abrégé**

La présente invention se rapporte à une dalle murale chauffante comprenant au moins un élément de parement, accumulateur de chaleur et au moins un élément diffuseur de chaleur dans lequel ledit élément de parement comprend au moins un renfoncement de façon à pouvoir loger ledit élément diffuseur de chaleur à l'intérieur de la section du mur tout en laissant un espace entre le parement et l'élément diffuseur de chaleur permettant une circulation libre de l'air autour de celui-ci.

## Description

### Objet de l'invention

La présente invention se rapporte à un élément de construction diffusant de la chaleur et plus particulièrement à une dalle de construction comprenant un élément chauffant.

### Etat de la technique

L'état de la technique propose une multitude de solutions en matière d'émetteur de chaleur. Parmi celles-ci on peut citer les plus fréquemment utilisées, que sont les aérothermes ou souffleurs d'air chaud, les radiateurs métallique, et le chauffage par chape chauffante, encore appelé, chauffage par rayonnement de sol. Physiquement il y a deux modes de transmission de chaleur que sont le chauffage par convection ou convectif et le chauffage par rayonnement ou rayonnant.

Le mécanisme du chauffage par convection est caractérisé par le fait que l'émetteur de chaleur transmet son énergie à l'air ambiant, et met celui-ci en mouvement. Il chauffe ainsi un volume d'air essentiellement déterminé par le volume du bâtiment chauffé. Dans ce mode de chauffage, l'élément chauffant est habituellement de petite taille et est construit pour brasser un volume maximum d'air par unité de temps.

Le chauffage par rayonnement transmet, quant à lui, l'énergie du corps de chauffe par le rayonnement aux corps se trouvant dans le voisinage de celui-ci. Plus ces corps sont proches l'un de l'autre, plus l'échange est important. Il faut donc limiter les distances entre le ou les éléments chauffants par rapport au corps chauffé. L'énergie ainsi transmise est essentiellement dépendante de la nature et de la taille de la surface émettrice, ainsi que de sa température propre.

Les deux modes de fonctionnement coexistent dans des proportions plus ou moins grandes, selon la construction de l'émetteur.

Les installations de chauffage de type « central » utilisent une source de chaleur physiquement séparée des diffuseurs de chaleur et la présente invention est un élément de construction équipé d'un diffuseur de chaleur pour une installation de type chauffage « central ».

Le chauffage des bâtiments par air chaud pulsé présente toute une série d'inconvénients tels qu'une importante circulation de poussières et une grande consommation d'énergie. Ce type de chauffage, ne produisant d'ailleurs aucune inertie, est extrêmement tributaire des renouvellements d'air lors par exemple des ouvertures de portes.

Le chauffage par rayonnement de sol, quant à lui, est extrêmement difficile à utiliser dans les bâtiments industriels dans la mesure où les chapes sur panneaux isolants ne présentent pas une résistance statique suffisante pour la circulation d'engins lourds. Par ailleurs ce type de bâtiment nécessite souvent la fixation de nombreux dispositifs au sol mettant en danger l'étanchéité des tuyaux dans lesquels circule le liquide caloporteur ce qui rend ce type de solution de chauffage incompatible avec une utilisation industrielle.

Pour contourner cette difficulté, l'inventeur a alors imaginé un élément de construction, faisant partie des parois du bâtiment combinant judicieusement un effet de transmission de chaleur par rayonnement associé à un léger effet de chauffage par convection.

Le document DE 19608702 Al propose des éléments de construction de différentes formes complexes pouvant s'adapter à une maçonnerie en plusieurs couches et pouvant recevoir des éléments de fixation pour tuyaux chauffants à intégrer dans les murs. Ces éléments ne constituent cependant pas des éléments de construction en tant que tels mais plutôt des éléments de liaison entre les différentes couches murales.

Le document américain US-A-4,292,500 de Semanaz et al. décrit un module de construction chauffant essentiellement basé sur des panneaux de plâtre. Ces panneaux ayant des cavités rectilignes comportant un élément de chauffage électrique sous la forme d'une bande chauffante flexible dans laquelle se trouve un câble électrique enrobé d'une matière isolante. Un tel panneau est essentiellement construit pour des utilisations non industrielles et présente l'inconvénient de ne pas pouvoir être utilisé comme mur porteur vu sa faible résistance mécanique (plâtre).

### Buts de l'invention

La présente invention vise à fournir un élément de construction telle qu'une dalle murale chauffante pouvant servir d'élément de chauffage essentiellement par rayonnement notamment pour les bâtiments industriels.

La présente invention vise donc en particulier à fournir un élément de chauffage faisant partie intégrante du mur de la construction et remplissant ainsi à la fois une fonction statique et dynamique.

### Résumé de l'invention

L'invention se rapporte à une dalle murale chauffante comprenant au moins un élément de parement, accumulateur de chaleur et au moins un élément diffuseur de chaleur caractérisée en ce que ledit élément de parement comprend au moins un renfoncement de façon à pouvoir loger ledit élément diffuseur de chaleur à l'intérieur de la section du mur tout en laissant un espace entre le parement et l'élément diffuseur de chaleur permettant une circulation libre de l'air autour de celui-ci.

Ledit élément diffuseur de chaleur selon l'invention couvre au moins 70% de la surface du parement de ladite dalle.

Ledit élément diffuseur de chaleur selon l'invention est séparé du parement par un embossage écarteur pour assurer la présence d'une lame d'air derrière celui-ci.

Toujours selon l'invention, ledit élément diffuseur de chaleur comprend en son sein au moins un tuyau capable de véhiculer un fluide caloporteur.

Ledit élément diffuseur de chaleur selon l'invention est interchangeable de manière indépendante par rapport au parement.

Ladite dalle selon l'invention est compatible avec des dalles murales traditionnelles non chauffantes.

Ladite dalle selon l'invention comprend des éléments de fixation capable de solidariser celle-ci à la structure portante du bâtiment.

Toujours selon l'invention, ladite dalle est capable de s'intégrer au sein d'une paroi murale classique comprenant un isolant et un bardage extérieur.

Ladite dalle de l'invention est compatible avec des dalles murales classiques et/ou avec une maçonnerie en bloc.

De plus, la présente invention se rapporte également à l'utilisation d'une dalle murale chauffante comme élément de construction et de chauffage pour les bâtiments.

### Brève description des figures

La figure 1 représente une vue de profil de l'élément de construction diffuseur de chaleur de la présente invention.

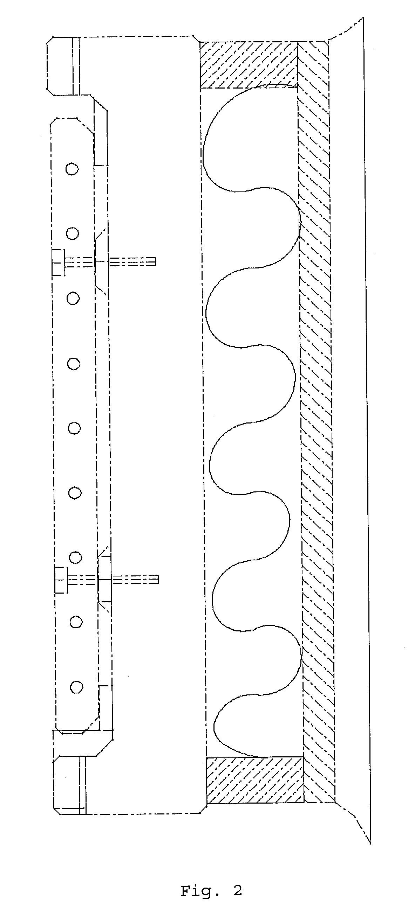

La figure 2 représente une vue de profil de l'élément de construction diffuseur de chaleur de la présente invention intégrée dans une paroi isolée.

La figure 3 représente une vue en perspective de la présente invention.

La figure 4 représente un assemblage d'éléments selon l'invention.

La figure 5 représente le parement de l'élément de construction de la présente invention sans son élément chauffant.

La figure 6 représente l'assemblage des éléments de l'invention avec les ouvertures de passages pour les tuyaux véhiculant par exemple l'eau chaude de l'élément chauffant.

La figure 7 représente une section du parement avec son bossage écarteur et ses armatures de renfort.

La figure 8 représente une vue en perspectives des armatures de fixation de l'élément chauffant de la présente invention.

La figure 9 représente l'emplacement de tuyaux véhiculant le liquide caloporteur sur l'élément chauffant de la présente invention.

### Description détaillée de l'invention

La présente invention concerne un élément de construction, par exemple en béton préfabriqué, constituant le parement mural intérieur d'un bâtiment associé à un élément diffuseur de chaleur. Dans la suite de l'exposé, nous appellerons celui-ci dalle chauffante.

La dalle chauffante de la présente invention distribue la chaleur contenue dans un fluide caloporteur, ce fluide étant porté à température par une source de chaleur quelconque bien connue de l'homme de métier.

La particularité de l'invention consiste en sa double fonction, que sont le chauffage et l'élément de construction des murs d'un bâtiment. L'enveloppe du bâtiment peut ne pas être constituée exclusivement de cette dalle chauffante. Le mur peut être composé d'une dalle murale chauffante et d'une maçonnerie en bloc traditionnelle, ou encore de dalles murales traditionnelles non-chauffantes. Toutes les variantes sont compatibles entre elles.

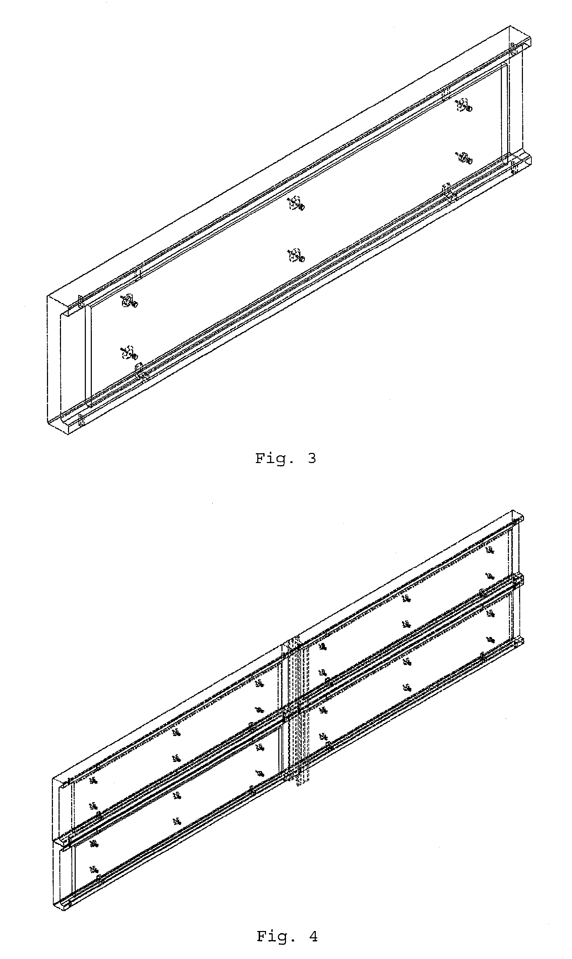

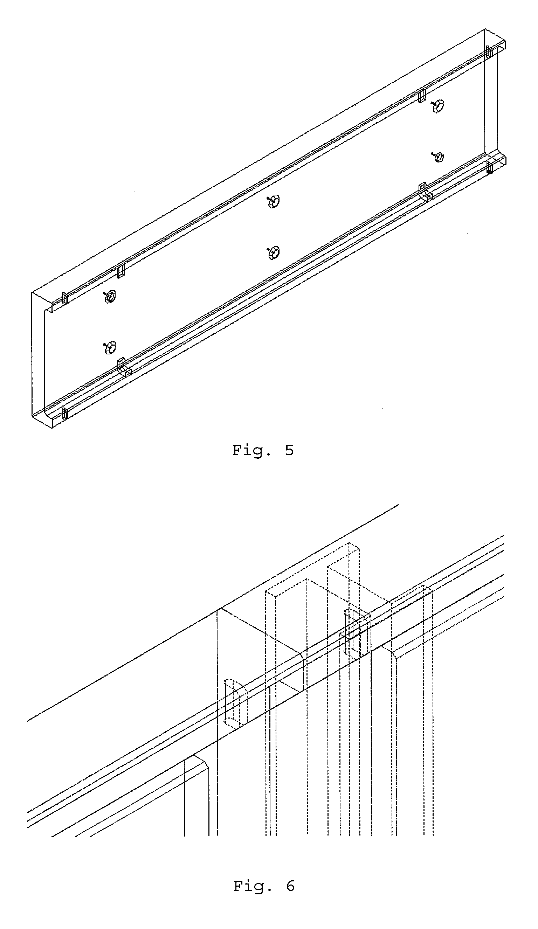

La dalle chauffante de la présente invention ne fait pas partie de la structure porteuse du bâtiment. Elle devra seulement supporter son propre poids en compression dû à la superposition de plusieurs éléments selon l'invention. La figure 4 montre la manière d'empiler les dalles pour élever un mur. Un parement traditionnel rigide est donc nécessaire pour maintenir les dalles chauffantes. La fixation de celles-ci, décrite par la figure 6, utilise une poutre métallique à profilé symétrique 12 scellée dans le béton aux extrémités de la dalle, sur la partie parement 1 illustrée à la figure 4. Cette dernière jouant le rôle de structure porteuse pour les éléments de la présente invention.

Les dimensions de la dalle chauffante sont variables pour pouvoir s'adapter aux différents types de structure qui les reçoivent. Néanmoins, les dimensions de 5 mètres x 1.2 mètres x 0.23 mètre (Longueur x Hauteur x Épaisseur) sont les plus courantes dans les bâtiments utilisant ce type de structure. Des dalles de dimensions plus petites pourront bien entendu être utilisées dans les habitations à usage domestique.

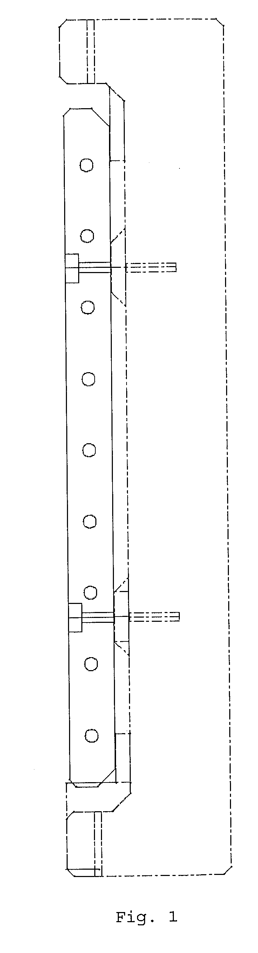

Comme mentionné précédemment, l'objet de la présente invention possède une double fonctionnalité : parement et diffuseur de chaleur. La dalle est constituée de deux éléments distincts qui sont fabriqués séparément. La figure 1 montre les deux parties 5 et 1 constitutives de l'objet de l'invention. Chacune des deux parties est fabriquée d'une seule pièce.

Cet assemblage offre l'avantage de permettre le remplacement de la partie chauffante si elle est endommagée sans pour autant toucher ni à la structure du mur ni à son esthétique. L'assemblage des deux pièces se fait par l'entremise de six vis de fixation. Des douilles femelles 7 sont scellées dans la partie parement afin de faciliter le montage ou le démontage éventuel. Ces six douilles sont placées sur les six bossages 8 en surface intérieure de la dalle. Ces bossages 8 garantissent un écartement d'environ deux centimètres entre les deux parties. Les têtes des vis de fixation 13 sont noyées à l'aide d'un évidement dans la partie chauffante 5 afin d'éviter tout bossage en surface de l'élément. Il est évident que le nombre de douilles et de bossages sera toujours en adéquation avec la taille de l'élément à prendre en considération.

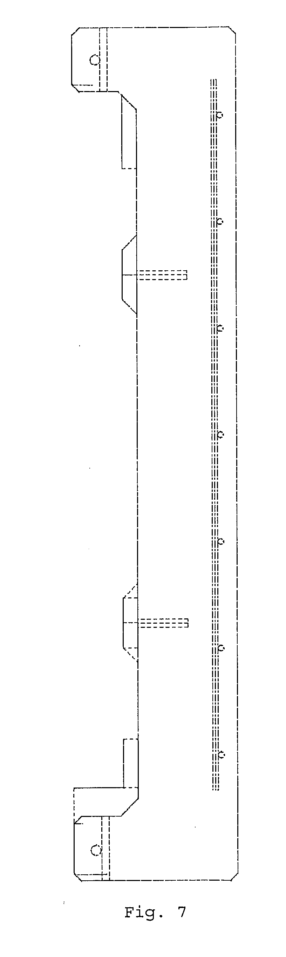

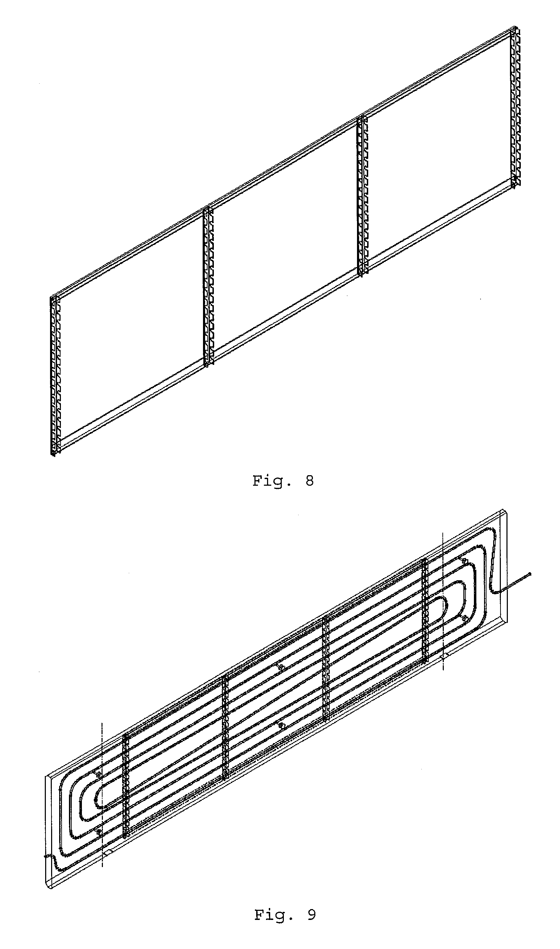

Le parement est consolidé par une armature métallique 9 enrobée permettant l'accrochage physique avec le béton. Ces armatures sont indispensables pour la manipulation de la dalle pendant la phase de fabrication. Les figures 7 et 8 décrivent le positionnement de cette armature par rapport à la section du parement. Un treillis est ainsi posé du côté extérieur avec un enrobage de béton de trois centimètres par rapport à la surface. Deux ronds à béton sont insérés dans les extrémités de la forme en « U » du parement.

Le matériau constitutif du parement 1 est par exemple un béton vibré classique de densité 2,4 g/cm³ environ. Par opposition au béton de type « léger » de densité inférieure à 2 g/cm³, le béton « lourd » possède une capacité accrue de stockage d'énergie calorifique. Cette caractéristique de stockage est ici utilisée afin de conférer à l'ensemble du bâtiment une inertie thermique importante et donc des variations de température par unité de temps très limitées.

La forme de la section du parement 1 en « U » offre un logement destiné à recevoir la partie chauffante 5. L'ensemble ne consomme ainsi aucun espace utile à l'intérieur du bâtiment. Tout est compris dans l'épaisseur du mur. La surface extérieure de la partie chauffante ne doit en aucun cas dépasser le plan formé par les deux retours de la forme en « U » du parement.

La partie chauffante vient se loger dans le parement. Elle est constituée de trois principaux éléments que sont le béton, l'armature métallique 10 et le tuyau 6. Elle est totalement soutenue par le parement et n'intervient donc en aucune manière dans la structure portante de l'ensemble mural. Les figures 8 et 9 décrivent le positionnement de l'armature 10 et du tuyau 6 dans le volume de la partie chauffante 5. L'armature remplit deux fonctions : renfort du béton lors des phases de manipulation et support du serpentin de tuyau. Sa forme simple en échelle permet cette double fonction. L'épaisseur totale de l'ensemble tuyau - armature métallique ne devrait pas dépasser 30 mm et permettre un enrobage suffisant par le béton.

Le tuyau utilisé est spécifiquement adapté à l'enrobage béton et permet une longue durée de vie du produit. Ce tuyau multicouche PE-Al-PE permet une étanchéité parfaite à l'oxygène empêchant l'oxydation des conduites métalliques ou de l'échangeur de chaleur de la chaudière, une longue durée de vie au produit à haute température, un placement aisé et enfin de ne pas interagir et s'oxyder avec l'armature métallique par le biais des potentiels redox.

Le placement du tuyau doit éviter les croisements du fait de la faible épaisseur de la partie chauffante. Le fluide caloporteur entre d'un coté pour en ressortir de l'autre. La pose du tuyau, en colimaçon avec un écartement de 10 cm, permet une distribution de chaleur uniforme tout au long de l'élément chauffant.

Le rapport entre la surface chauffante et la surface totale de la dalle assemblée doit être le plus élevé possible afin de bénéficier au maximum de l'effet radiatif. La partie chauffante est moins longue d'environ 25 cm de chaque coté afin de permettre un raccordement aisé une fois la dalle chauffante mise en place. Ce retrait empêche également les ponts thermiques entre la partie chaude et la structure du bâtiment.

Une ouverture de 3 cm est réalisée entre le dessous des extrémités de la forme en « U » du parement et le dessus de la partie chauffante, pour créer un effet de cheminée dans la lame d'air, entre l'arrière de la partie chauffante et la partie intérieure du parement. L'effet de convection est de ce fait optimisé et autorise un échange calorifique nettement supérieur à un mur classique chauffant. Le rayonnement de chaleur émis par la surface arrière de la partie chauffante est directement captée par le parement, chauffant celui-ci et accentuant encore l'effet de convection par tirage. Cet effet convectif est particulièrement utile dans les nombreux cas où des objets font obstacles aux radiations émises par la partie chauffante. Le parement ainsi chauffé et constitué d'un matériau lourd, joue le rôle de tampon. Il restitue l'énergie accumulée durant les phases de fonctionnement maximal, pendant les périodes de fonctionnement au ralenti.

La disposition de l'entrée et de la sortie du tuyau autorise une mise en série extrêmement simple par un raccord. La figure 6 détaille les gorges 11 formées dans le parement pour permettre l'alimentation de la dalle par le bas ou par le haut, par l'entremise d'un raccord coudé à 90°. La superposition ainsi que la mise dans l'alignement, ne pose aucun problème du fait du type de connexion.

La gestion du débit d'eau chaude circulant dans la canalisation enrobée peut être de type tout ou rien ou à débit variable. La température de surface est néanmoins peu influencée par le débit mais est directement proportionnelle à la température de l'eau en entrée. Toutefois, le débit devra être suffisant si plusieurs dalles chauffantes sont placées en série, le maximum est généralement de trois, limitant ainsi l'écart de température entre l'eau entrante dans la première et celle entrant dans la dernière. Il est plus aisé de travailler à débit constant et de réguler par tout ou rien. La masse importante de la partie chauffante permet d'amortir fortement les variations brusques de température.

La partie extérieure du parement 1 offre une surface plane facilement recouverte d'éléments isolants 4. Le bardage 2 prendra place sur cette surface.

La tranche supérieure du parement 1 est équipée de deux goujons enrobés dont la tête est noyée par un évidement, ainsi ils ne gênent pas l'empilement des dalles. Ces goujons permettent la manutention de l'ensemble.

### Légende

1. Parement
2. Bardage extérieur
3. Feuille d'étanchéité
4. Isolant thermique
5. Paroi chauffante
6. Tuyau avec liquide caloporteur
7. Fixation assemblage
8. Bossage écarteur
9. Armature de renfort
10. Armature de fixation des tuyaux
11. Ouvertures de passage des tuyaux
12. Rail profilé symétrique pour fixation à la structure du bâtiment
13. Vis de fixation
14. Goujons
15. Douilles femelles

## Revendications

1. Dalle murale chauffante comprenant au moins un élément de parement (1), accumulateur de chaleur et au moins un élément diffuseur de chaleur (5) **caractérisée en ce que** ledit élément de parement comprend au moins un renfoncement de façon à pouvoir loger ledit élément diffuseur de chaleur à l'intérieur de la section du mur tout en laissant un espace entre le parement et l'élément diffuseur de chaleur permettant une circulation libre de l'air autour de celui-ci.

2. Dalle murale chauffante selon la revendication 1 **caractérisée en ce que** ledit élément diffuseur de chaleur (5) couvre au moins 70% de la surface du parement (1) de ladite dalle.

3. Dalle murale chauffante selon la revendication 1 ou 2 **caractérisée en ce que** ledit élément diffuseur de chaleur (5) est séparé du parement (1) par un embossage écarteur (8) pour assurer la présence d'une lame d'air derrière celui-ci.

4. Dalle murale chauffante selon la revendication 1,2 ou 3 **caractérisée en ce que** ledit élément diffuseur de chaleur (5) comprend en son sein au moins un tuyau (6) capable de véhiculer un fluide caloporteur.

5. Dalle murale chauffante selon la revendication 1, 2, 3 ou 4 **caractérisée en ce que** ledit élément diffuseur de chaleur (5) est interchangeable de manière indépendante par rapport au parement (1).

6. Dalle murale chauffante selon l'une quelconque des revendications précédentes **caractérisée en ce que** ladite dalle est compatible avec des dalles murales traditionnelles non chauffantes.

7. Dalle murale chauffante selon l'une quelconque des revendications précédentes **caractérisée en ce que** ladite dalle comprend des éléments de fixation capable de solidariser celle-ci à la structure portante du bâtiment.

8. Dalle murale chauffante selon l'une quelconque des revendications précédentes **caractérisée en ce que** ladite dalle est capable de s'intégrer au sein d'une paroi murale classique comprenant un isolant (4) et un bardage extérieur (2).

9. Dalle murale chauffante selon l'une quelconque des revendications précédentes **caractérisée en ce que** ladite dalle est compatible avec des dalles murales classiques et/ou avec une maçonnerie en bloc.

10. Utilisation d'une dalle murale chauffante comme élément de construction et de chauffage pour les bâtiments.
